# EUROPEAN PATENT APPLICATION

(11) **EP 4 738 208 A1**
(43) Date of publication of application: **06.05.2026**
(21) Application number: 24842270.1
(22) Date of filing: 11.07.2024
(51) Int. Cl.: G06N 20/00

(54) **COMMUNICATION METHOD, APPARATUS AND SYSTEM**

(30) Priority: 18.07.2023 CN 202310883716
(71) Applicant: Huawei Technologies Co., Ltd., Shenzhen, Guangdong 518129 (CN)
(72) Inventor: LIN, Hsiao-Ying, Shenzhen, Guangdong 518129 (CN); LEI, Zhongding, Shenzhen, Guangdong 518129 (CN); SHI, Jie, Shenzhen, Guangdong 518129 (CN)
(74) Representative: Maiwald GmbH
(86) International application number: PCT/CN2024/104901
(87) International publication number: WO 2025/016276

(57) **Abstract**

This application provides a communication method, apparatus, and system. The method provides a solution that can effectively improve accuracy of a model obtained through federated learning. Specifically, the method includes: before training a first model from a first network element by using a local dataset, a second network element may perform data processing on the local dataset based on an indication of the first network element; and then train the first model by using a local dataset obtained after the data processing, to obtain a second model, and send the second model to the first network element. The data processing is used to enable the local dataset to meet a data reliability requirement. In this way, before model training is performed, data processing is first performed on the local dataset used for performing model training. This can effectively improve reliability of the local dataset, and can effectively improve accuracy of the model obtained through federated learning.

## Description

This application claims priority to Chinese Patent Application No. 202310883716.X, filed with the China National Intellectual Property Administration on July 18, 2023 and entitled "COMMUNICATION METHOD, APPARATUS, AND SYSTEM", which is incorporated herein by reference in its entirety.

### TECHNICAL FIELD

This application relates to the field of communication technologies, and more specifically, to a communication method, apparatus, and system.

### BACKGROUND

Federated learning (federated learning, FL) is an emerging basic artificial intelligence technology, and is designed to implement high-efficient machine learning between a plurality of participants or a plurality of computing nodes on a premise of ensuring information security during big data exchange, protecting terminal data and personal data privacy, and ensuring validity.

Specifically, a server-side network element sends, to a client-side network element, a model that needs to be trained, and the client-side network element trains the model based on a local training dataset collected by the client-side network element, to obtain a model parameter of a trained model. The client-side network element sends the model parameter to the server-side network element, and the server-side network element performs aggregation processing on the model parameter, to complete model training on the model.

However, accuracy of the model obtained through training based on the foregoing federated learning may be doubtful, and consequently the model cannot be well applied in some scenarios. Therefore, how to effectively improve accuracy of a model obtained through federated learning is an urgent technical problem that needs to be resolved currently.

### SUMMARY

This application provides a communication method, apparatus, and system, so that accuracy of a model obtained through federated learning can be effectively improved.

According to a first aspect, a communication method is provided. The method includes: A first network element sends a first model and first indication information to a second network element, where the first indication information indicates the second network element to perform data processing on a first dataset, and the first dataset is used by the second network element to train the first model; and the first network element receives a second model sent by the second network element, where the second model is obtained after the second network element trains the first model by using a second dataset, and the second dataset is a dataset obtained after the second network element performs data processing on the first dataset.

The first dataset is a dataset that is obtained by the second network element and that is used to train the first model from the first network element. The second network element may obtain or collect the first dataset from another network element.

Specifically, that a first network element sends a first model to a second network element may be: The first network element sends a model architecture of the first model and an initial parameter in the model architecture to the second network element. That the first network element receives a second model may be: The first network element receives a model architecture of the second model and a parameter in the model architecture that are sent by the second network element. The model architecture of the first model may be the same as or different from the model architecture of the second model. This is not limited herein.

It should be noted that the foregoing data processing is used to enable the first dataset to meet a data reliability requirement. The foregoing data processing may be data cleaning processing; and may be used to delete data that has a security risk from the first dataset, or may be used to remove invalid data, incomplete data, duplicate data, or the like from the first dataset, or may be used to supplement missing data or the like in the first dataset. In this way, reliability of the dataset used for model training can be ensured. In addition, a type or specific content of the foregoing data processing is not specifically limited in this embodiment of this application. The "data reliability requirement" may be that the first dataset includes less duplicate data, or the first dataset includes less incomplete data, or the first dataset includes less dangerous data or the like.

In addition, the first indication information may also indicate the second network element to train the first model by using the first dataset obtained after the data processing. In this way, the second network element can perform data processing on the first dataset based on the first indication information, to obtain the first dataset obtained after the data processing, namely, the second dataset.

Specifically, the foregoing data processing is performed on the first dataset, so that reliability of a dataset used to train a machine learning model can be effectively ensured, the machine learning model is trained based on the secure dataset, and accuracy of a model obtained through federated learning can be effectively improved.

Specifically, before training the first model by using the first dataset, the second network element may first perform data processing on the first dataset based on an indication of the first network element, to obtain the second dataset, and train the first model by using the second dataset. In this way, before training the first model, the second network element first performs data processing on the dataset used to train the first model. This can effectively ensure the reliability of the dataset used to train the machine learning model, and can effectively improve the accuracy of the model obtained through federated learning.

In a possible implementation, the method further includes: The first network element sends second indication information to the second network element, where the second indication information indicates an algorithm, and the algorithm is used by the second network element to perform data processing on the first dataset.

Specifically, the second network element may perform data processing on the first dataset according to the algorithm indicated by the first network element, so that efficiency of performing data processing on the first dataset can be improved.

In a possible implementation, the method further includes: The first network element sends a data amount threshold to the second network element, where the data amount threshold indicates the second network element to train the machine learning model when a data amount of the second dataset is greater than or equal to the data amount threshold.

In this way, the machine learning model can be trained based on a dataset that meets a specific data amount, so that the accuracy of the model obtained through federated learning can be effectively improved.

In a possible implementation, the method further includes: The first network element receives first feedback information sent by the second network element, where the first feedback information indicates that the second network element has performed data processing on the first dataset.

In this way, the first network element can determine that a model parameter of the trained machine learning model is obtained through training by the second network element by using the dataset obtained after the data processing.

In a possible implementation, the method further includes: The first network element receives a data amount of the first dataset and the data amount of the second dataset that are sent by the second network element.

In this way, the first network element can observe data quality when the second network element performs data collection, and can further determine whether to continue to enable the second network element to perform model training.

In a possible implementation, the method further includes: The first network element receives second feedback information sent by the second network element, where the second feedback information indicates that the second network element has performed data processing on the first dataset according to the algorithm.

In this way, the first network element can determine that the second network element performs data processing on the first dataset according to the algorithm indicated by the first network element.

In a possible implementation, the method further includes: The first network element sends request information to the second network element, where the request information is used to request the second network element to train the first model, and the request information includes the first model and the first indication information.

Specifically, after receiving the request information of the first network element, the second network element may trigger or start training on the first model based on the request information.

In a possible implementation, the request information further includes the second indication information.

The second indication information is carried in a same piece of information, so that signaling overheads can be effectively reduced.

In a possible implementation, the request information further includes the data amount threshold.

The data amount threshold is carried in a same piece of information, so that signaling overheads can be effectively reduced.

According to a second aspect, a communication method is provided. The method includes: A second network element receives a first model and first indication information that are sent by a first network element, where the first indication information indicates the second network element to perform data processing on a first dataset; the second network element performs data processing on the first dataset based on the first indication information, to obtain a second dataset; the second network element trains the first model based on the second dataset, to obtain a second model; and the second network element sends the second model to the first network element.

In a possible implementation, the method further includes: The second network element receives second indication information sent by the first network element, where the second indication information indicates an algorithm, and the algorithm is used by the second network element to perform data processing on the first dataset.

In a possible implementation, the method further includes: The second network element receives a data amount threshold sent by the first network element, where the data amount threshold indicates the second network element to train the first model when a data amount of the second dataset is greater than or equal to the data amount threshold.

In a possible implementation, the method further includes: The second network element sends first feedback information to the first network element, where the first feedback information indicates that the second network element has performed data processing on the first dataset.

In a possible implementation, the method further includes: The second network element sends a data amount of the first dataset and the data amount of the second dataset to the first network element.

In a possible implementation, the method further includes: The second network element sends second feedback information to the first network element, where the second feedback information indicates that the second network element has performed data processing on the first dataset according to the algorithm.

In a possible implementation, the method further includes: The second network element receives request information sent by the first network element, where the request information is used to request the second network element to train the first model, and the request information includes the first model and the first indication information.

In a possible implementation, the request information further includes the second indication information.

In a possible implementation, the request information further includes the data amount threshold.

According to a third aspect, a communication apparatus is provided. The communication apparatus may be a network device, or may be a device, a module, or the like configured to perform a function of the network device.

In a possible implementation, the communication apparatus may include modules or units that perform the one-to-one corresponding methods/operations/steps/actions described in the first aspect. The module or unit may be implemented by a hardware circuit, software, or a combination of a hardware circuit and software.

According to a fourth aspect, a communication apparatus is provided. The communication apparatus may be a terminal device, or may be a device, a module, or the like configured to perform a function of the terminal device.

In a possible implementation, the communication apparatus may include modules or units that perform the one-to-one corresponding methods/operations/steps/actions described in the second aspect. The module or unit may be implemented by a hardware circuit, software, or a combination of a hardware circuit and software.

According to a fifth aspect, a communication apparatus is provided. The communication apparatus includes a processor. The processor is configured to: execute a computer program or instructions, or enable, through a logic circuit, the communication apparatus to perform the method according to any one of the first aspect and the possible implementations of the first aspect; or the communication apparatus to perform the method according to any one of the second aspect and the possible implementations of the second aspect.

In a possible implementation, the communication apparatus further includes a memory, and the memory is configured to store the computer program or the instructions.

In a possible implementation, the communication apparatus further includes a communication interface, and the communication interface is configured to input a signal and/or output a signal.

According to a sixth aspect, a communication apparatus is provided. The communication apparatus includes a logic circuit and an input/output interface. The input/output interface is configured to input a signal and/or output a signal. The logic circuit is configured to perform the method according to any one of the first aspect and the possible implementations of the first aspect; or the logic circuit is configured to perform the method according to any one of the second aspect and the possible implementations of the second aspect.

According to a seventh aspect, a computer-readable storage medium is provided. The computer-readable storage medium stores a computer program or instructions. When the computer program or the instructions are run on a computer, the method according to any one of the first aspect and the possible implementations of the first aspect is performed, or the method according to any one of the second aspect and the possible implementations of the second aspect is performed.

According to an eighth aspect, a computer program product is provided. The computer program product includes instructions. When the instructions are run on a computer, the method according to any one of the first aspect and the possible implementations of the first aspect is performed, or the method according to any one of the second aspect and the possible implementations of the second aspect is performed.

According to a ninth aspect, a communication system is provided. The communication system includes a first network element and a second network element. The first network element is configured to send a first model and first indication information to the second network element, where the first indication information indicates the second network element to perform data processing on a first dataset, and the first dataset is used by the second network element to train the first model; the second network element is configured to receive the first model and the first indication information; the second network element is configured to perform data processing on the first dataset based on the first indication information, to obtain a second dataset; the second network element is configured to train the first model based on the second dataset, to obtain a second model; the second network element is configured to send the second model to the first network element; and the first network element is configured to receive the second model.

For functions performed by the first network element and the second network element, refer to the related descriptions in the first aspect, the second aspect, and the like. Details are not described again.

For descriptions of beneficial effect of any one of the second aspect to the ninth aspect, refer to descriptions of beneficial effect of the first aspect.

### BRIEF DESCRIPTION OF DRAWINGS

FIG. 1 is a diagram of a communication system 100 to which an embodiment of this application is applicable;
FIG. 2 is a diagram of a 5G network architecture 200 according to an embodiment of this application;
FIG. 3 is an interaction flowchart of a communication method 300 according to an embodiment of this application;
FIG. 4 is an interaction flowchart of a communication method 400 according to an embodiment of this application;
FIG. 5 is an interaction flowchart of a communication method 500 according to an embodiment of this application;
FIG. 6 is a block diagram of a communication apparatus 600 according to an embodiment of this application;
FIG. 7 is a block diagram of a communication apparatus 700 according to an embodiment of this application; and
FIG. 8 is a block diagram of a communication apparatus 800 according to an embodiment of this application.

### DESCRIPTION OF EMBODIMENTS

For ease of understanding of embodiments of this application, the following descriptions are provided first.
1. In various embodiments of this application, unless otherwise stated or there is a logic conflict, terms and/or descriptions in different embodiments are consistent and may be mutually referenced, and technical features in different embodiments may be combined based on an internal logical relationship thereof, to form a new embodiment.
2. Various numbers in this application are distinguished for ease of description, but are not intended to limit the scope of this application. Sequence numbers in this application do not mean an execution sequence, and the execution sequence of the processes should be determined based on functions and internal logic of the processes. For example, in the specification, claims, and accompanying drawings of this application, the terms "first", "second", "third", "fourth", various other term reference numerals, and the like (if existent) are intended to distinguish between similar objects, but do not necessarily indicate a specific order or sequence. It should be understood that the data used in such a way is interchangeable in proper circumstances, so that embodiments described herein can be implemented in other orders than the order illustrated or described herein.
3. The terms "include", "have", and variants thereof are intended to cover non-exclusive inclusion. For example, a process, method, system, product, or device that includes a series of steps or units is not necessarily limited to those expressly listed steps or units, but may include other steps or units not expressly listed or inherent to such a process, method, product, or device.
4. In this application, "indicate" may be understood as "enable", and "enable" may include "directly enable" and "indirectly enable". When a piece of information is described to enable A, the information may directly enable A or indirectly enable A, but it does not mean that the information definitely carries A.

Information enabled by the information is referred to as to-be-enabled information. In a specific implementation process, the to-be-enabled information may be enabled in a plurality of manners, for example, but not limited to, the to-be-enabled information may be directly enabled, for example, the to-be-enabled information or an index of the to-be-enabled information. Alternatively, the to-be-enabled information may be indirectly enabled by enabling other information, where there is an association relationship between the other information and the to-be-enabled information. Alternatively, only a part of the to-be-enabled information may be enabled, and another part of the to-be-enabled information is known or pre-agreed. For example, specific information may alternatively be enabled by using a pre-agreed on (for example, protocol-specified) arrangement sequence of all information, to reduce enabling overheads to some extent. In addition, a common part of all information may be identified and enabled in a unified manner, to reduce enabling overheads caused by enabling same information separately.

5. "Storage" or "store" in this application may mean "being stored" in one or more memories. The one or more memories may be separately disposed, or may be integrated into an encoder or a decoder, a processor, or a communication apparatus. Alternatively, a part of the one or more memories may be separately disposed, and a part of the one or more memories are integrated into the decoder, the processor, or the communication apparatus. A type of the memory may be a storage medium in any form. This is not limited in this application.

6. "Protocols" in this application may be standard protocols in the communication field, for example, may include a 4th generation (4th generation, 4G) network protocol, a 5th generation (5th generation, 5G) network protocol, a new radio (new radio, NR) protocol, a 5.5G network protocol, a 6th generation (6th generation, 6G) network protocol, and a related protocol applied to a future communication system. This is not limited in this application.

7. Arrows or blocks shown by dashed lines in the diagrams of the accompanying drawings in the specification of this application indicate optional steps or optional modules.

8. Any embodiment or design scheme described as "example" or "for example" in this application should not be explained as being more preferred or having more advantages than another embodiment or design scheme. To be precise, use of the terms such as "example" or "for example" is intended to present a related concept in a specific manner for ease of understanding.

9. In this application, unless otherwise specified, "/" indicates an "or" relationship between associated objects. For example, A/B may indicate A or B. "And/or" in this application describes only an association relationship for describing associated objects and indicates that three relationships may exist. For example, A and/or B may indicate the following three cases: Only A exists, both A and B exist, and only B exists, where A and B may be singular or plural.

For better understanding of the technical solutions in this application, the following describes a communication system, a communication method, and a communication apparatus from the following aspects.

### I. Communication system

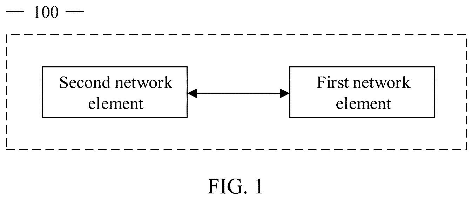

To resolve the technical problem mentioned in the background, this application provides an applicable communication system 100. As shown in FIG. 1, the communication system 100 includes a first network element (which may be a server-side network element) and a second network element (which may be a client-side network element).

Specifically, the first network element and the second network element may exchange content of a model training task. For example, the first network element is configured to send, to the second network element, a model that needs to be trained, and the second network element is configured to collect a local dataset and perform, by using the local dataset, model training on the model sent by the first network element. The first network element may be further configured to send, to the second network element, indication information and the like indicating the second network element to perform data processing on the local dataset obtained by the second network element.

In the communication system 100, the first network element and the second network element may be data function network elements (network elements having a data processing function). For example, the first network element may be a network data analytics function (network data analytics function, NWDAF) network element on a server (server) side in a 5G network, and the second network element may be an NWDAF on a client (client) side in the 5G network.

In addition, the communication system 100 may further include a plurality of second network elements. To be specific, the first network element exchanges the content such as the model training task with the plurality of second network elements, to jointly complete the model training task. For ease of description, in embodiments of this application, an example in which the communication system 100 includes one second network element is used for description, but a scenario in which more second network elements are included is not limited, and functions or tasks performed by all second network elements are approximately the same.

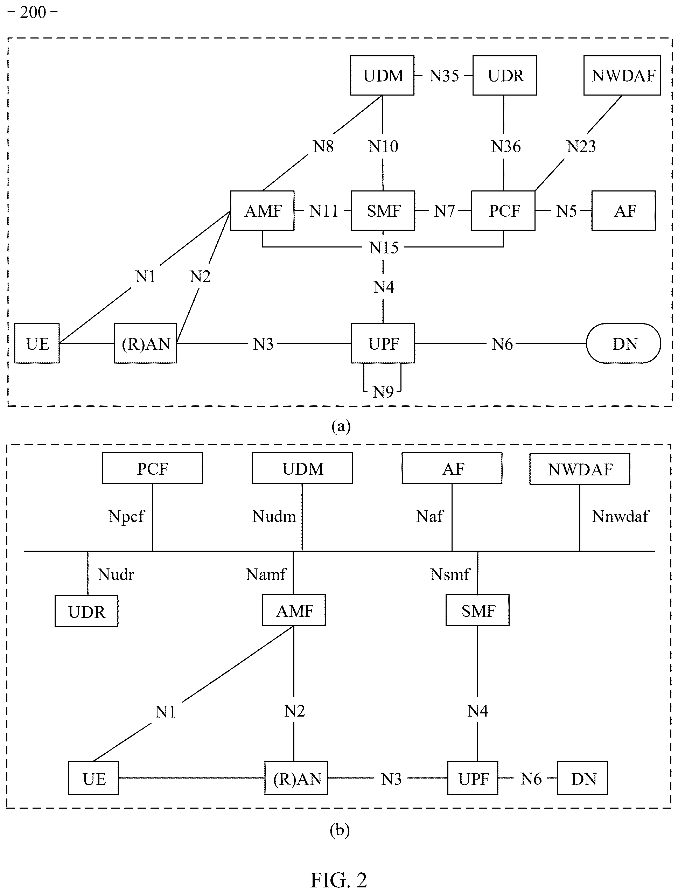

The following uses an example in which the communication system 100 is applied to a 5G network architecture for description. FIG. 2 is a diagram of a 5G network architecture in which a communication system 100 is used. As shown in (a) in FIG. 2, the 5G network architecture 200 may include the following network elements:

### 1. Access and mobility management function (access and mobility management function, AMF) network element.

The AMF mainly performs functions such as mobility management, or access authentication/authorization. In addition, the AMF is further responsible for transferring a user policy between a terminal device and a policy control function (policy control function, PCF) network element. In addition, the AMF may receive non-access stratum (non-access stratum, NAS) signaling (including mobility management (mobility management, MM) signaling and session management (session management, SM) signaling) of the terminal device and related signaling of an access network device (for example, next generation (next generation, NG) 2 interface signaling, of a base station granularity, exchanged with the AMF), to complete a user registration procedure, SM signaling forwarding, and mobility management.

### 2. Session management function (session management function, SMF) network element.

The SMF is mainly configured to perform session management, internet protocol (internet protocol, IP) address allocation and management of the terminal device, selection of an endpoint that can manage a user plane function and a policy control and charging function interface, downlink data notification, and the like. The SMF may be further configured to complete a procedure, for example, establishment, release, or update, related to a protocol data unit (protocol data unit, PDU) session.

### 3. Policy control function (policy control function, PCF) network element.

The PCF may be responsible for user policy management, including a mobility related policy and a PDU session related policy, for example, a QoS policy or a charging policy.

### 4. Unified data repository (unified data repository, UDR).

The UDR mainly includes the following functions: (1) A unified data management (unified data management, UDM) network element stores subscription data or reads subscription data; (2) The PCF stores policy data or reads policy data; and (3) storing exposed data or reading exposed data.

The UDR and a network function (network function, NF) that accesses the UDR have a same public land mobile network (public land mobile network, PLMN), in other words, in a same network. That is, an Nudr interface is an internal interface of the PLMN.

### 5. UDM.

The UDM mainly includes the following functions: unified data management, support for authentication credential processing in a 3GPP authentication and key agreement mechanism, user identity processing, access authorization, registration and mobility management, subscription management, messaging management, and the like.

### 6. Application function (application function, AF) network element.

The AF mainly includes the following functions: interacting with a 3GPP core network to provide a business or service, including interacting with an NEF, interacting with a policy architecture, and the like.

### 7. User plane function (user plane function, UPF) network element.

The UPF is used as an interface to a data network, and implements functions such as user plane data forwarding, session/flow level-based charging statistics collection, and bandwidth limitation, that is, packet routing and forwarding, QoS handling for user plane data, or the like.

### 8. (Radio) access network (radio access network, (R)AN) device.

The (R)AN can manage a radio resource, provide an access service for the terminal device, and complete forwarding of data of the terminal device between the terminal device and a core network. The (R)AN may also be understood as a base station. For details, refer to the foregoing descriptions.

### 9. Data network (data network, DN) network element.

The DN is configured to provide, for example, an operator service, an internet access service, or a third-party service, and includes a server, where a server side implements video source coding, rendering, and the like.

### 10. Network repository function (network repository function, NRF) network element.

The NRF is responsible for maintaining network element service information, supporting receiving of a network element registration service, and returning target network element service information based on a network element discovery request. Because there may be interfaces between all service-based network elements (for example, the AMF, SMF, and PCF) in the foregoing architecture, the interfaces are not presented in the figure.

### 11. NWDAF.

The NWDAF is responsible for providing a network data analysis service. Specifically, the NWDAF may communicate with another NF through an existing service-based interface. The NWDAF may also expose a data analysis result to any consumption NF through a service-based interface. Interaction between the NF and the NWDAF occurs in the PLMN. The NWDAF may further interact with the NRF, the PCF, and the like.

In the foregoing descriptions, the network element may be a network element in a hardware device, or may be a software function running on dedicated hardware, or may be a virtualization function instantiated on a platform (for example, a cloud platform). One or more services may be obtained through division based on the foregoing function network element. Further, a service independent of a network function may exist. An instance of the foregoing function network element, an instance of a service included in the foregoing function network element, or an instance of a service independent of a network function may be referred to as a service instance.

It can be learned from (a) in FIG. 2 that a terminal device accesses a 5GS through an access network device, the terminal device communicates with an AMF through an NG1 interface (N1 for short), the access network device communicates with the AMF through an NG2 interface (N2 for short), the access network device communicates with a UPF through an NG3 interface (N3 for short), the AMF communicates with an SMF through an NG11 interface (N11 for short), the AMF communicates with a UDM through an NG8 interface (N8 for short), the AMF communicates with a PCF through an NG15 interface (N15 for short), the SMF communicates with the PCF through an NG7 interface (N7 for short), the SMF communicates with the UPF through an NG4 interface (N4 for short), the UPF accesses a DN through an NG6 interface (N6 for short), an NWDAF communicates with the PCF through an NG23 interface (N23 for short), the UDM communicates with a UDR through an NG35 interface (N35 for short), the PCF communicates with the UDR through an NG36 interface (N36 for short), and so on.

Interfaces between control plane network elements in (a) in FIG. 2 are point-to-point interfaces. During actual implementation, the interfaces between the control plane network elements may alternatively be service-based interfaces shown in (b) in FIG. 2. Npcf, Nudr, Nudm, Naf, Namf, Nsmf, and Nnwdaf in (b) of FIG. 2 are service-based interfaces provided by the PCF, the UDR, the UDM, the AF, the AMF, the SMF, and the NWDAF respectively, and are used to invoke corresponding service-based operations.

Names of the network elements shown in (a) in FIG. 2 or (b) in FIG. 2 are merely names, and the names do not constitute a limitation on functions of the network elements. In a 5G network and another future network, the network elements may alternatively have other names. This is not specifically limited in embodiments of this application. For example, in a 6G network, some or all of the network elements may still use terms in 5G, or may have other names. Unified descriptions are provided herein. Details are not described again below.

The 5G network structure shown in FIG. 2 is merely an example for description. The 5G network structure shown in FIG. 2 may further include other network elements that are not mentioned, for example, an authentication server function (authentication server function, AUSF), a network slice selection function (network slice selection function, NSSF), and a network exposure function (network element function, NEF) network element.

In addition, the "network element" in this specification may also be referred to as a network function instance (network function instance), an NF, a device, an apparatus, a module, or the like. This is not particularly limited in this application. In addition, the foregoing names are defined only for ease of distinguishing between different functions, and shall not constitute any limitation. This application does not exclude a possibility that another name is used in the 5G network and another future network. For example, in a 6G network, some or all of the networks may still use terms in 5G, or may use other names. The names of the interfaces between the network elements are merely examples, and the names of the interfaces may be other names during specific implementation. This is not specifically limited in this application. In addition, names of messages (or signaling) transmitted between the foregoing network elements are merely examples, and do not constitute any limitation on functions of the messages.

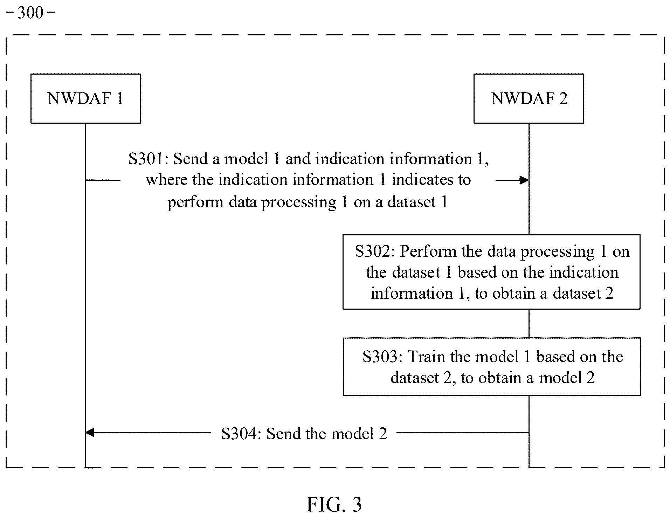

Interaction between a first network element (an NWDAF 1 is used as an example) and a second network element (an NWDAF 2 is used as an example) is further described below with reference to FIG. 3.

### II. Communication method

FIG. 3 is an interaction flowchart of a communication method 300 according to an embodiment of this application. The method 300 relates to interaction between an NWDAF 1 and an NWDAF 2. The NWDAF 1 and the NWDAF 2 are examples of the foregoing data function network elements, but are not limited thereto. The method 300 includes the following steps.

S301: The NWDAF 1 sends a model 1 and indication information 1 (for example, first indication information (indicator)) to the NWDAF 2, where the indication information 1 indicates to perform data processing 1 on a dataset 1 (for example, a first dataset), and the dataset 1 is used by the NWDAF 2 to train the model 1.

Correspondingly, the NWDAF 2 receives the model 1 and the indication information 1. Further, the NWDAF 2 determines, based on the indication information 1, that the data processing 1 needs to be performed on the dataset 1.

Specifically, the model 1 may be any model on which a function consumer requests, from the NWDAF 1, to perform model training. In other words, the function consumer may subscribe to a federated learning service of the model 1 from the NWDAF 1. Further, the NWDAF 1 initiates and leads a federated learning procedure based on the model 1. The model 1 may be a deep neural network, a random forest model, or the like.

Specifically, that the NWDAF 1 sends the model 1 to the NWDAF 2 may be as follows: The NWDAF 1 sends a model architecture of the model 1 and an initial parameter in the model architecture to the NWDAF 2. Further, the NWDAF 2 is configured to specifically perform a model training process for the model 1.

To ensure data reliability of the dataset 1, the NWDAF 1 sends, to the NWDAF 2, the indication information 1 indicating to perform the data processing 1 on the dataset 1, and the NWDAF 2 performs the data processing 1 on the dataset 1 based on the indication information 1, so that the dataset 1 can meet a preset requirement, for example, a data reliability requirement. In other words, the data processing 1 is used to enable the dataset 1 to meet the data reliability requirement.

In this embodiment of this application, the data processing 1 may be data cleaning processing; and may be used to delete data that has a security risk from the dataset 1, or may be used to remove invalid data, incomplete data, duplicate data, or the like from the dataset 1. In this way, reliability and/or security of the dataset used to train a machine learning model can be ensured. In addition, a type or specific content of the foregoing data processing is not specifically limited in this embodiment of this application. The "data reliability requirement" may be that the dataset 1 includes less duplicate data, or the dataset 1 includes less incomplete data, or the dataset 1 includes less dangerous data or the like.

In a possible implementation, the indication information 1 may indicate the NWDAF 2 to train the model 1 by using the dataset 1 obtained after the data processing. In this way, the NWDAF 2 may perform data processing on the dataset 1 based on the indication information 1, to obtain the dataset 1 obtained after the data processing, namely, a dataset 2. Therefore, the indication information 1 does not necessarily need to explicitly indicate the NWDAF 2 to perform the data processing 1 on the dataset 1, and may implicitly indicate the NWDAF 2 to perform the data processing 1 on the dataset 1, to obtain the dataset 2.

In a possible implementation, the indication information 1 may indicate whether the NWDAF 2 uses the dataset 1 obtained after the data processing to train the model 1. For example, the indication information 1 may be indicated by using one bit. For example, when a value of the indication information 1 is 1, the indication information 1 indicates to perform the data processing 1 on the dataset 1; or when the value of the indication information 1 is 0, the indication information 1 does not indicate to perform the data processing 1 on the dataset 1. In an optional implementation, the indication information 1 may indicate whether the NWDAF 2 performs data processing on the dataset 1. The indication information 1 indicates that the data processing 1 is performed on the dataset 1; or the indication information 1 may be supported to not indicate to perform the data processing 1 on the dataset 1. For example, it is specified or configured that when the indication information 1 is a special value (for example, 0), the indication information 1 does not indicate that the data processing 1 is performed on the dataset 1. Therefore, the foregoing content is merely used as an example for understanding, and is not used as a final limitation.

S302: The NWDAF 2 performs the data processing 1 on the dataset 1 based on the indication information 1, to obtain the dataset 2 (for example, a second dataset).

Specifically, the dataset 1 is a dataset that is obtained by the NWDAF 2 and that is used to train the model 1 from the NWDAF 1. The NWDAF 2 may obtain the dataset 1 from another network element. For example, the NWDAF 2 may obtain, from an NRF or another NF configured to provide data, the dataset 1 that can be used by the NWDAF 2 to perform model training on the model 1.

Further, after performing the data processing 1 on the dataset 1, the NWDAF 2 obtains the dataset 2.

S303: The NWDAF 2 trains the model 1 based on the dataset 2, to obtain a model 2.

For content of training the model 1 by the NWDAF 2 by using the dataset 2, refer to an existing procedure. Details are not described again.

S304: The NWDAF 2 sends the model 2 to the NWDAF 1.

Correspondingly, the NWDAF 1 receives the model 2.

Specifically, that the NWDAF 1 receives the model 2 may be as follows: The NWDAF 1 receives a model architecture of the model 2 and a parameter in the model architecture that are sent by the NWDAF 2. The model architecture of the model 1 may be the same as or different from the model architecture of the model 2. This is not limited herein.

In the foregoing solution, before training the model 1 by using the dataset 1 based on an indication of the NWDAF 1, the NWDAF 2 may first perform data processing on the dataset 1, to obtain the dataset 2, and train the model 1 by using the dataset 2. In this way, before training the model 1, the NWDAF 2 first performs data processing on the dataset used for model training. This can effectively ensure reliability of the dataset used to train the machine learning model, and can effectively improve accuracy of the model obtained through federated learning.

Specifically, when the data processing 1 is used to remove dangerous data from the dataset 1, the NWDAF 2 may train the model 1 based on security data or reliable data, and the model 2 obtained by performing training based on the security data or the reliable data may be more accurately applied to a specific scenario. When the data processing 1 is used to remove missing data or incomplete data from the dataset 1, the NWDAF 2 may perform model training on the model 1 based on complete data or non-missing data to obtain the model 2, and the model 2 obtained by performing training based on the complete data or the non-missing data may be more accurately applied to a specific scenario. When the data processing 1 is used to delete redundant data from the dataset 1, the NWDAF 2 may perform model training on the model 1 based on non-redundant data. This can effectively optimize an algorithm for performing model training, so that a result is more accurate, and accuracy of the model obtained through federated learning can be improved.

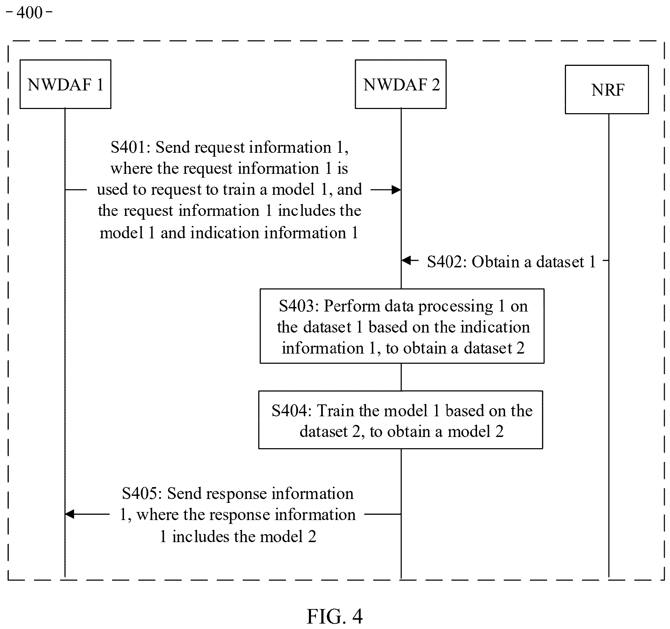

The following further describes the method shown in FIG. 3 with reference to FIG. 4.

FIG. 4 is an interaction flowchart of a communication method 400 according to an embodiment of this application. As shown in FIG. 4, the method 400 includes the following steps.

S401: An NWDAF 1 sends request information 1 to an NWDAF 2, where the request information 1 is used to request the NWDAF 2 to train a model 1, and the request information 1 includes the model 1 and indication information 1.

Correspondingly, the NWDAF 2 receives the request information 1, and further determines, based on the request information 1, to train the model 1.

Specifically, the request information 1 may be used to trigger or notify the NWDAF 2 to start a federated learning procedure based on the model 1.

S402: The NWDAF 2 obtains a dataset 1.

Specifically, after the NWDAF 2 receives the request information 1, the NWDAF 2 interacts with an NRF, to obtain the dataset 1 used to train the model 1.

S403: The NWDAF 2 performs the data processing 1 on the dataset 1 based on the indication information 1, to obtain a dataset 2.

For descriptions of S403, refer to the descriptions of S302. Details are not described again.

In a possible embodiment, the request information 1 may further include indication information 2 (for example, second indication information), and the indication information 2 indicates an algorithm 1. The algorithm 1 is used by the NWDAF 2 to perform data processing 1 on the dataset 1. In other words, the NWDAF 2 may perform the data processing 1 on the dataset 1 according to the algorithm 1, to obtain the dataset 2.

Specifically, the NWDAF 2 may perform data processing on the dataset 1 according to the algorithm indicated by the NWDAF 1, so that efficiency of performing data processing on the dataset 1 can be improved, and the dataset 2 can better meet a requirement of the NWDAF 1 on a dataset used to train a machine learning model.

In a possible embodiment, the request information 1 may further include a data amount threshold, and the data amount threshold indicates the NWDAF 2 to train the model 1 when a data amount of the dataset 2 is greater than or equal to the data amount threshold. In this way, the model 1 can be trained based on a specific data amount, so that accuracy of the model obtained through federated learning can be effectively improved.

S404: The NWDAF 2 trains the model 1 based on the dataset 2, to obtain a model 2.

For descriptions of S404, refer to the descriptions of S303. Details are not described again.

S405: The NWDAF 2 sends response information 1 to the NWDAF 1, where the response information 1 includes the model 2.

Correspondingly, the NWDAF 1 receives the response information 1, and obtains the model 2 based on the response information 1.

In a possible embodiment, the response information 1 may further include feedback information 1, and the feedback information 1 indicates the NWDAF 2 to perform the data processing 1 on the dataset 1. In this way, the NWDAF 1 can determine that a model parameter of the trained model 1 is obtained through training by the NWDAF 2 by using the dataset obtained after the data processing.

In a possible embodiment, the response information 1 may further include feedback information 2, and the feedback information 2 indicates that the NWDAF 2 has performed the data processing 1 on the dataset 1 according to the algorithm 1. In this way, the NWDAF 1 can determine that the NWDAF 2 performs the data processing 1 on the dataset 1 according to the algorithm indicated by the NWDAF 1.

In a possible embodiment, the response information 1 may further include a data amount of the dataset 1 and the data amount of the dataset 2. In this way, the NWDAF 1 can observe data quality when the NWDAF 2 performs data collection, and can further determine whether to continue to enable the NWDAF 2 to perform model training.

It should be noted that the foregoing content is described by using an example in which the request information 1 includes the data amount threshold and the indication information 2. However, no limitation is constituted on the data amount threshold and the indication information 2 that need to be located in a same piece of information as the indication information 1 and the model 1. When the request information 1 includes both the data amount threshold and the indication information 2, signaling overheads can be effectively reduced.

In addition, the foregoing content is described by using an example in which the response information 1 includes the feedback information 1 and the feedback information 2. However, no limitation is constituted on the feedback information 1 and the feedback information 2 that need to be located in a same piece of information as the model 2. When the response information 1 includes both the feedback information 1 and the feedback information 2, signaling overheads can be effectively reduced.

In the foregoing solution, before training the model 1 by using the dataset 1 based on an indication of the NWDAF 1, the NWDAF 2 may first perform data processing on the dataset 1, to obtain the dataset 2, and train the model 1 by using the dataset 2. In this way, before training the model 1, the NWDAF 2 first performs data processing on the dataset used for model training. This can effectively ensure reliability of the dataset used for model training, and can effectively improve accuracy of the model obtained through federated learning.

In the method 400, when the NWDAF 2 does not use the algorithm 1 to perform the data processing 1 on the dataset 1, and uses an algorithm 2 to perform the data processing 1 on the dataset 1, the NWDAF 2 may indicate the algorithm 2 to the NWDAF 1. In this way, the NWDAF 1 can determine a specific algorithm name of the data processing 1 implemented by the NWDAF 2.

It should be noted that when the method 400 relates to a plurality of NWDAFs 2, the NWDAF 1 may perform model aggregation processing on models, obtained after training, from the plurality of NWDAFs 2, to better complete model training.

In embodiments of this application, it is mainly described, in the foregoing method embodiments (the method 300 and the method 400), that the NWDAF 1 sends, to the NWDAF 2, content indicating to perform data processing on the dataset used for model training; and before training the model, the NWDAF 2 first performs data processing on the dataset used for model training, so that the dataset used for model training can meet reliability, and accuracy of the model obtained through federated learning can be effectively improved.

Information names adopted or used in the foregoing method embodiments are merely used as examples for understanding, and are not used as final limitations. For example, the indication information 1 may be a parameter 1, and the parameter 1 indicates to perform the data processing 1 or the like on the dataset 1. For another example, the indication information 1 may be an indicator or the like. In addition, the foregoing information may be compatible with an information name or a communication procedure in a 5G or future communication architecture. For example, the NWDAF 1 may send the indication information 1 and the indication information 2 through a service interface. This is not limited.

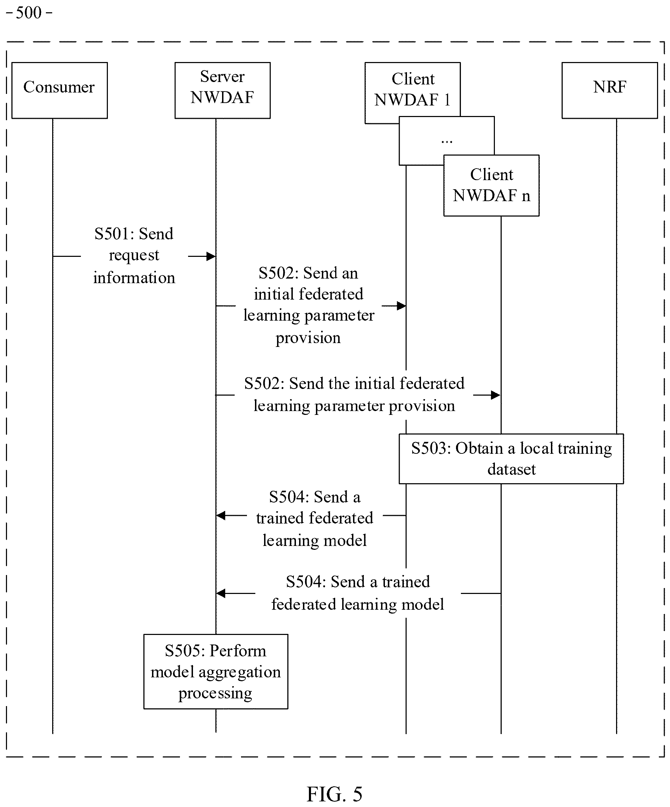

The following further describes the method in FIG. 4 with reference to FIG. 5.

FIG. 5 is an interaction flowchart of a communication method 500 according to an embodiment of this application. As shown in FIG. 5, the method 500 includes the following steps.

S501: A function consumer (consumer) sends request information to a server-side (server) NWDAF.

Correspondingly, the server NWDAF receives the request information from the consumer, where the request information is used to request to subscribe to a federated learning service. Further, the server NWDAF may determine, based on the request information, that a federated learning procedure needs to be initiated. The request information may further include an initial federated learning model that needs to be trained.

S502: The server NWDAF sends an initial federated learning parameter provision (initial federated learning parameters provisions) to n client-side (client) NWDAFs.

Correspondingly, the n client NWDAFs receive the "initial federated learning parameters provisions". The "initial federated learning parameters provisions" may also be understood as the initial federated learning model.

It should be noted that the n client NWDAFs are selected by the server NWDAF to participate in performing federated learning training. The N client NWDAFs are responsible for specifically performing the federated learning procedure. The "initial federated learning parameters provisions" includes the initial federated learning model, and the initial federated learning model is a model that needs to be trained.

S503: The n client NWDAFs obtain a local training dataset from an NRF.

Specifically, each of the n client NWDAFs may collect data from the NRF (or may collect data from another NF) and form the local training dataset, and the local training dataset is used to perform federated learning training.

Further, each of the n client NWDAFs trains the initial federated learning model based on a local training dataset obtained by the client NWDAF, to obtain the trained federated learning model.

S504: Each of the n client NWDAFs sends the trained federated learning model to the server NWDAF.

Correspondingly, the server NWDAF receives the trained federated learning model sent by each of the n client NWDAFs.

S505: The server NWDAF performs model aggregation processing.

After the server NWDAF receives the trained federated learning models sent by the n client NWDAFs, the server NWDAF performs model aggregation processing on the received n trained federated learning models, to complete training of the initial federated learning model.

In the foregoing procedure, when the server NWDAF does not indicate the n client NWDAFs to perform data processing on the local training dataset, accuracy of the trained federated learning models fed back by the n client NWDAFs is not necessarily high. Therefore, in S502, in this application, the server NWDAF is supported to further send, to the n client NWDAFs, an indicator indicating to perform data processing, so that accuracy of the trained federated learning models fed back by the n client NWDAFs can be improved to some extent.

In addition, content shown in the method 500 may be compatible with the content shown in FIG. 3 and FIG. 4. For specific descriptions, refer to the foregoing descriptions. Details are not described again.

### III. Communication apparatus

To implement functions in the foregoing methods, both a first network element and a second network element may include a hardware structure and/or a software module, and implement the foregoing functions in a form of the hardware structure, the software module, or a combination of the hardware structure and the software module. Whether a function in the foregoing functions is performed in the manner of the hardware structure, the software module, or the combination of the hardware structure and the software module depends on particular applications and design constraint conditions of the technical solutions.

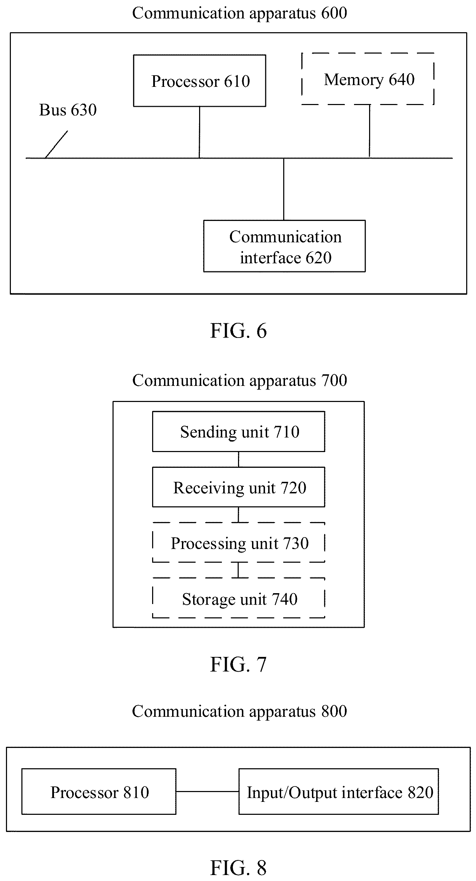

FIG. 6 is a block diagram of a communication apparatus 600 according to an embodiment of this application. The communication apparatus 600 includes a processor 610 and a communication interface 620. The processor 610 and the communication interface 620 are connected to each other through a bus 630. The communication apparatus 600 may be a first network element, or may be a second network element.

Optionally, the communication apparatus 600 further includes a memory 640.

Specifically, the memory 640 includes but is not limited to a random access memory (random access memory, RAM), a read-only memory (read-only memory, ROM), an erasable programmable read-only memory (erasable programmable read-only memory, EPROM), or a compact disc read-only memory (compact disc read-only memory, CD-ROM). The memory 640 is configured to store related instructions and data.

The processor 610 may be one or more central processing units (central processing units, CPU). When the processor 610 is one CPU, the CPU may be a single-core CPU, or may be a multi-core CPU.

When the communication apparatus 600 is the first network element, for example, the processor 610 is configured to perform the following operations: sending a model 1 and indication information 1; and receiving a model 2.

When the communication apparatus 600 is the second network element, for example, the processor 610 is configured to perform the following operations: receiving a model 1 and indication information 1; and sending a model 2 and the like.

The foregoing content is merely used as an example for description. When the communication apparatus 600 is the first network element and the second network element, the communication apparatus 600 is responsible for performing methods or steps related to the first network element and the second network element in the foregoing method embodiments.

The foregoing descriptions are merely an example for description. For specific content, refer to the content shown in the foregoing method embodiments. In addition, for implementation of operations in FIG. 6, refer to the corresponding descriptions in the method embodiments shown in FIG. 3 to FIG. 5.

FIG. 7 is a block diagram of a communication apparatus 700 according to an embodiment of this application. The communication apparatus 700 may be a first network element or a second network element, or may be a chip or a module in the first network element or the second network element. The communication apparatus 700 includes a sending unit 710 and a receiving unit 720. The following describes the sending unit 710 and the receiving unit 720 by using examples.

For example, when the communication apparatus 700 is the first network element, the sending unit 710 is configured to send a model 1 and indication information 1, and the receiving unit 720 is configured to receive a model 2.

For example, when the communication apparatus 700 is the second network element, the sending unit 710 is configured to send a model 2, and the receiving unit 720 is configured to receive a model 1, indication information 1, and the like.

Optionally, the communication apparatus 700 may further include a processing unit 730, and the processing unit 730 is configured to perform content related to steps such as processing and coordination of the second network element.

In addition, the communication apparatus 700 may further include a storage unit 740 (where a network repository function network element, the first network element, or the second network element is not distinguished), and the storage unit 740 is configured to store a program or code used to perform the foregoing method.

The foregoing content is merely used as an example for description. When the communication apparatus 700 is the first network element and the second network element, the communication apparatus 700 is responsible for performing methods or steps related to the first network element or the second network element in the foregoing method embodiments. For implementation of operations in FIG. 7, refer to corresponding descriptions of the method shown in the foregoing embodiments. Details are not described herein again.

FIG. 8 is a block diagram of a communication apparatus 800 according to an embodiment of this application. The communication apparatus 800 may be configured to implement functions of the first network element or the second network element in the foregoing method. The communication apparatus 800 may be a chip in the first network element or the second network element. The communication apparatus 800 includes an input/output interface 820 and a processor 810. The input/output interface 820 may be an input/output circuit. The processor 810 may be a signal processor, a chip, or another integrated circuit that can implement the method in this application. The input/output interface 820 is configured to input or output a signal or data.

For example, when the communication apparatus 800 is the first network element, the input/output interface 820 is configured to send a model 1 and indication information 1, and is further configured to receive a model 2. The processor 810 is configured to perform some or all of steps in any one of the methods provided in this application.

For example, when the communication apparatus 800 is the second network element, the input/output interface 820 is configured to send a model 2, and receive a model 1, the indication information 1, and the like.

In a possible implementation, the processor 810 executes instructions stored in a memory, to implement a function of the network repository function network element, the first network element, or the second network element.

Optionally, the communication apparatus 800 further includes the memory.

Optionally, the processor and the memory are integrated together.

Optionally, the memory is outside the communication apparatus 800.

In a possible implementation, the processor 810 may be a logic circuit, and the processor 810 inputs/outputs a message or signaling through the input/output interface 820. The logic circuit may be a signal processor, a chip, or another integrated circuit that can implement the method in embodiments of this application.

The foregoing descriptions of the apparatus in FIG. 8 are merely an example for description. The apparatus can be configured to perform the method in the foregoing embodiments. For specific content, refer to the descriptions in the foregoing method embodiments.

This application further provides a chip. The chip includes a processor, configured to invoke instructions from a memory and run the instructions stored in the memory, so that a communication device on which the chip is installed is enabled to perform the methods in the foregoing examples.

This application further provides another chip. The chip includes an input interface, an output interface, and a processor. The input interface, the output interface, and the processor are connected through an internal connection path. The processor is configured to execute code in a memory; and when the code is executed, the processor is configured to perform the methods in the foregoing examples. Optionally, the chip further includes the memory, and the memory is configured to store a computer program or the code.

This application further provides a processor, configured to couple to a memory, and configured to perform the method and the function of the network device or the terminal device in any one of the foregoing embodiments.

Another embodiment of this application provides a computer program product including instructions. When the computer program product is run on a computer, the method in the foregoing embodiments is implemented.

This application further provides a computer program. When the computer program is run on a computer, the method in the foregoing embodiments is implemented.

Another embodiment of this application provides a computer-readable storage medium. The computer-readable storage medium stores a computer program. When the computer program is executed by a computer, the method in the foregoing embodiments is implemented.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, the disclosed system, apparatus, and method may be implemented in another manner. For example, the described apparatus embodiment is merely an example. For example, division into the units is merely logical function division and may be other division during actual implementation. For example, a plurality of units or components may be combined or integrated into another system, or some features may be ignored or not performed.

In addition, the displayed or discussed mutual couplings or direct couplings or communication connections may be implemented through some interfaces. The indirect couplings or communication connections between the apparatuses or units may be implemented in electrical, mechanical, or another form.

The units described as separate parts may or may not be physically separate, and parts displayed as units may or may not be physical units, in other words, may be located in one place, or may be distributed on a plurality of network units. Some or all of the units may be selected based on actual requirements to achieve the objectives of the solutions of embodiments.

Functional units in embodiments of this application may be integrated into one processing unit, each of the units may exist alone physically, or two or more units are integrated into one unit.

When functions are implemented in the form of a software functional unit and sold or used as an independent product, the functions may be stored in a computer-readable storage medium. Based on such an understanding, the technical solutions in embodiments of this application essentially, or the part contributing to the conventional technology, or some of the technical solutions may be implemented in a form of a software product. The computer software product is stored in a storage medium, and includes several instructions for instructing a computer device (which may be a personal computer, a server, or a network device) to perform all or some of the steps of the method described in embodiments of this application. The foregoing storage medium includes any medium that can store program code, such as a USB flash drive, a removable hard disk, a ROM, a RAM, a magnetic disk, or an optical disc.

The foregoing descriptions are merely specific implementations in embodiments of this application, but are not intended to limit the protection scope in embodiments of this application. Any variation or replacement readily figured out by a person skilled in the art within the technical scope disclosed in embodiments of this application shall fall within the protection scope in embodiments of this application. Therefore, the protection scope of embodiments of this application should be subject to the protection scope of the claims.

## Claims

1. A communication method, comprising:
sending, by a first network element, a first model and first indication information to a second network element, wherein the first indication information indicates the second network element to perform data processing on a first dataset, the first dataset is a dataset obtained by the second network element, and the first dataset is used by the second network element to train the first model; and
receiving, by the first network element, a second model sent by the second network element, wherein the second model is a model obtained after the second network element trains the first model by using a second dataset, and the second dataset is a dataset obtained after the second network element performs data processing on the first dataset.

2. The method according to claim 1, wherein the method further comprises:
sending, by the first network element, second indication information to the second network element, wherein the second indication information indicates an algorithm, and the algorithm is used by the second network element to perform data processing on the first dataset.

3. The method according to claim 1 or 2, wherein the method further comprises:
sending, by the first network element, a data amount threshold to the second network element, wherein the data amount threshold indicates the second network element to train the machine learning model when a data amount of the second dataset is greater than or equal to the data amount threshold.

4. The method according to any one of claims 1 to 3, wherein the method further comprises:
receiving, by the first network element, first feedback information sent by the second network element, wherein the first feedback information indicates that the second network element has performed data processing on the first dataset.

5. The method according to any one of claims 1 to 4, wherein the method further comprises:
receiving, by the first network element, a data amount of the first dataset and the data amount of the second dataset that are sent by the second network element.

6. The method according to any one of claims 2 to 5, wherein the method further comprises:
receiving, by the first network element, second feedback information sent by the second network element, wherein the second feedback information indicates that the second network element has performed data processing on the first dataset according to the algorithm.

7. The method according to any one of claims 1 to 6, wherein the method further comprises:
sending, by the first network element, request information to the second network element, wherein the request information is used to request the second network element to train the first model, and the request information comprises the first model and the first indication information.

8. A communication method, comprising:
receiving, by a second network element, a first model and first indication information that are sent by a first network element, wherein the first indication information indicates the second network element to perform data processing on a first dataset, the first dataset is a dataset obtained by the second network element, and the first dataset is used by the second network element to train the first model;
performing, by the second network element, data processing on the first dataset based on the first indication information, to obtain a second dataset;
training, by the second network element, the first model based on the second dataset, to obtain a second model; and
sending, by the second network element, the second model to the first network element.

9. The method according to claim 8, wherein the method further comprises:
receiving, by the second network element, second indication information sent by the first network element, wherein the second indication information indicates an algorithm, and the algorithm is used by the second network element to perform data processing on the first dataset.

10. The method according to claim 8 or 9, wherein the method further comprises:
receiving, by the second network element, a data amount threshold sent by the first network element, wherein the data amount threshold indicates the second network element to train the first model when a data amount of the second dataset is greater than or equal to the data amount threshold.

11. The method according to any one of claims 8 to 10, wherein the method further comprises:
sending, by the second network element, first feedback information to the first network element, wherein the first feedback information indicates that the second network element has performed data processing on the first dataset.

12. The method according to any one of claims 8 to 11, wherein the method further comprises:
sending, by the second network element, a data amount of the first dataset and the data amount of the second dataset to the first network element.

13. The method according to any one of claims 9 to 12, wherein the method further comprises:
sending, by the second network element, second feedback information to the first network element, wherein the second feedback information indicates that the second network element has performed data processing on the first dataset according to the algorithm.

14. The method according to any one of claims 8 to 13, wherein the method further comprises:
receiving, by the second network element, request information sent by the first network element, wherein the request information is used to request the second network element to train the first model, and the request information comprises the first model and the first indication information.

15. A communication apparatus, comprising a processor, wherein the processor is configured to execute a computer program or instructions, or enable, through a logic circuit, to cause the communication apparatus to perform the method according to any one of claims 1 to 7, or perform the method according to any one of claims 8 to 14.

16. The communication apparatus according to claim 15, wherein the communication apparatus further comprises a memory, and the memory is configured to store the computer program or the instructions.

17. The communication apparatus according to claim 15 or 16, wherein the communication apparatus further comprises a communication interface, and the communication interface is configured to input a signal and/or output a signal.

18. A communication apparatus, comprising a logic circuit and an input/output interface, wherein the input/output interface is configured to input a signal and/or output a signal; and
the logic circuit is configured to perform the method according to any one of claims 1 to 7; or
the logic circuit is configured to perform the method according to any one of claims 8 to 14.

19. A computer-readable storage medium, wherein the computer-readable storage medium stores a computer program or instructions; and when the computer program or the instructions are executed on a computer,
the method according to any one of claims 1 to 7 is performed, or
the method according to any one of claims 8 to 14 is performed.

20. A computer program product, comprising instructions, wherein when the instructions are run on a computer,
the method according to any one of claims 1 to 7 is performed, or
the method according to any one of claims 8 to 14 is performed.

21. A communication system, comprising a first network element and a second network element, wherein
the first network element is configured to send a first model and first indication information to the second network element, wherein the first indication information indicates the second network element to perform data processing on a first dataset, the first dataset is a dataset obtained by the second network element, and the first dataset is used by the second network element to train the first model;
the second network element is configured to receive the first model and the first indication information;
the second network element is configured to perform data processing on the first dataset based on the first indication information, to obtain a second dataset;
the second network element is configured to train the first model based on the second dataset, to obtain a second model;
the second network element is configured to send the second model to the first network element; and
the first network element is configured to receive the second model.
